Europäisches Patentamt

European Patent Office

Office européen des brevets

(19)

(11) EP 0 998 369 B1

(12) FASCICULE DE BREVET EUROPEEN

(45) Date de publication et mention
de la délivrance du brevet:
**26.05.2004 Bulletin 2004/22**

(21) Numéro de dépôt: **98939704.7**

(22) Date de dépôt: **17.07.1998**

(51) Int Cl.⁷: **B23K 26/06**

(86) Numéro de dépôt international:
**PCT/FR1998/001571**

(87) Numéro de publication internationale:
**WO 1999/003636 (28.01.1999 Gazette 1999/04)**

(54) **DISPOSITIF ET PROCEDE DE DECOUPE A DISTANCE ETENDUE PAR LASER, EN MODE IMPULSIONNEL**

VORRICHTUNG UND VERFAHREN ZUM SCHNEIDEN MIT GRÖSSEREM ABSTAND MITTELS LASER IM IMPULSVERFAHREN

DEVICE AND METHOD FOR EXTENDED REMOTE LASER CUTTING IN PULSE MODE

(84) Etats contractants désignés:
**DE GB**

(30) Priorité: **18.07.1997 FR 9709157**

(43) Date de publication de la demande:
**10.05.2000 Bulletin 2000/19**

(73) Titulaire: **COMMISSARIAT A L'ENERGIE ATOMIQUE
75015 Paris (FR)**

(72) Inventeurs:
• **GRANDJEAN, Jean-Paul
F-30200 Sabran (FR)**
• **DUFAUD, Jean-Marc
F-30360 Ners (FR)**
• **ALFILLE, Jean-Pascal
F-92140 Clamart (FR)**
• **MEYRUEIS, Patrick
F-67000 Strasbourg (FR)**
• **TWARDOWSKI, Patrice
F-67100 Strasbourg (FR)**

(74) Mandataire: **Weber, Etienne Nicolas et al
c/o Brevatome,
3, rue du Docteur Lancereaux
75008 Paris (FR)**

(56) Documents cités:
**US-A- 4 870 244**

• **P. VERBOVEN: "Pulsed kilowatt Nd:YAG laser with fibre optic beam delivery" SPIE PROCEEDINGS SERIES, vol. 2206, 5 - 8 avril 1994, pages 416-425, XP002061613**
• **J.P. ALFILL : "Thick cutting of metallic material for nuclear dismantling applications with pulsed YAG laser" THE 5TH INTERNATIONAL CONFERENCE ON NUCLEAR ENGINEERING, 25 - 29 mai 1997, page 354 XP002061614**

## Description

Domaine technique et art antérieur

L'invention concerne le domaine du découpage par laser, en particulier en vue d'applications au démantèlement et/ou au démontage.

La technique du démantèlement, ou du démontage, par laser se distingue de l'usinage laser par un certain nombre de caractéristiques.

L'usinage laser opère à partir d'un phénomène physique simple : une lumière d'une couleur quelconque, d'un niveau énergétique suffisamment élevé, appliqué suffisamment longtemps sur une cible fait fondre cette dernière, vaporise la matière ou la déstructure (cas des lasers U.V.). L'usinage laser permet de réaliser des opérations de fabrication qui sont généralement suivies d'étapes d'assemblage permettant elles-mêmes de mettre en oeuvre la technique laser (soudure, traitement de surface, alliage localisé, fraisage).

Ainsi, des machines d'usinage laser de production comprenant des sources laser ont été élaborées et commercialisées principalement par des industriels de la machine-outil. Ces machines permettent de traiter des matériaux de façon optimisée, ce qui rend les opérations d'usinage plus précises; plus rapides, plus répétitives, tout en assurant un très bon niveau de qualité des pièces usinées.

Ces techniques mettent en oeuvre des procédures complémentaires à l'émission et au contrôle de la lumière laser proprement dite, et notamment la projection de gaz d'appoint à l'endroit d'impact du faisceau laser, pour éliminer les impuretés de la zone à traiter, améliorer la précision de la découpe, protéger les dispositifs optiques situés à proximité de la zone d'impact du laser sur la matière, et créer un micro-environnement gazeux dans la zone de découpe afin de contrôler le procédé.

Dans le cas du démantèlement ou du démontage par laser, les objectifs à atteindre pour une machine de découpe sont, a priori, très différents. Il semble en effet qu'il suffise, pour que l'opération de démantèlement soit satisfaisante, que la taille des pièces découpées corresponde à celle requise par les dispositifs de conditionnement permettant l'évacuation desdites pièces découpées.

De plus, il n'est pas envisageable, dans des dispositifs de démantèlement, de mettre en oeuvre des appareils permettant d'envoyer un gaz d'appoint sur la zone d'impact du faisceau laser. En effet, de tels appareils devraient, s'ils étaient utilisés, se situer à proximité de la pièce à découper. Or ceci n'est pas envisageable dans le cas du démantèlement, puisque le tir laser, pour des raisons de conditions d'exploitation des chantiers de démolition, doit être fait en respectant une distance entre l'optique et la pièce à découper, à cause de l'encombrement de la zone de travail (de l'ordre de 1 à 2m). Les machines laser utilisées pour le démantèlement s'éloignent donc, dans leur mode de fonctionnement, de celles utilisées pour la production de l'usinage.

De plus, une machine laser de démantèlement n'est pas destinée à travailler, comme en atelier, dans des conditions stables, mais doit plutôt opérer dans des conditions de chantier : elle est donc de préférence "rustique", compacte, légère. Le pilotage de la machine est également, de préférence, plus aisé que dans le cas d'une machine d'atelier.

Un dispositif de découpage est connu par le document US-4 870 244. L'enseignement de ce document repose sur l'utilisation d'un effet biphotonique, c'est-à-dire sur l'émission d'un premier rayonnement laser continu, ou pulsé, relaxé, qui fond le matériau, suivi par l'émission d'une impulsion laser de type "Q-switch" focalisée sur la cible que constitue la zone fondue par le premier laser, qui évacue le matériau par un effet détonnant. La mise en oeuvre de ce procédé suppose que la coordination des impulsions laser soit possible et soit suffisamment précise pour empêcher que le matériau fondu se resolidifie entre les deux impulsions laser, le Q-switch ne pouvant fonctionner industriellement à la fois de manière synchrone et en forte puissance.

Selon une variante, ce document enseigne que les deux lasers peuvent être remplacés par un seul laser fonctionnant alternativement en mode relaxé et en mode déclenché Q-switch. Mais il est bien précisé que, du fait de l'intervalle de temps nécessaire entre la fin du fonctionnement en mode continu et le début de l'impulsion, un refroidissement du matériau fondu sur la cible peut avoir lieu, ce qui limite les possibilités d'application de ce dispositif, ou de ce procédé, à des cibles nécessitant seulement des puissances de découpe faibles (épaisseur de matériau vraisemblablement inférieur à 0,1 mm pour l'acier).

Ce document ne décrit donc pas de dispositif qui soit utilisable, de manière pratique, dans des opérations de démantèlement industriel, vu les conditions de simplicité et de compacité que cette application impose et qui ont été mentionnées ci-dessus : en effet, le système avec deux lasers est complexe (il met en oeuvre une synchronisation), tandis que le système à un seul laser est d'application très délicate et limitée. Dans tous les cas la technologie Q-switch limite la puissance du procédé.

De plus, de par la technique Q-switch utilisée dans ce document U5-4 870 244, les impulsions obtenues sont difficilement programmables temporellement en mode répétitif.

Par conséquent, on ne connaît pas, actuellement, un dispositif de découpe laser ne mettant pas en oeuvre une projection de gaz d'appoint sur la zone d'impact laser, et qui reste, en même temps, simple et souple d'utilisation.

En outre, les techniques actuelles de démantèlement par laser qui opèrent en général en atelier, ou en laboratoire pilote avec gaz d'appoint ne permettent pas de réaliser, sans gaz d'appoint, des découpes de matériaux ayant une épaisseur importante (au moins 10 mm). Un problème supplémentaire se pose du fait de la présence, lors d'une découpe brute, de déchets tels que des gaz, ou de sédiments de type bille métallique.

Exposé de l'invention

L'invention propose donc un système de découpe laser qui reste de structure et d'utilisation simple, compatible avec des applications dans le domaine du démantèlement, ne mettant en oeuvre aucun gaz d'appoint, et pouvant opérer à des distances de plusieurs mètres entre l'optique et la pièce à découper.

En outre, même si, comme on l'a dit plus haut, les degrés de précision et de régularité dans la découpe ne sont, a priori, pas aussi critiques que dans le domaine de l'usinage, l'invention propose un dispositif permettant d'obtenir une découpe de qualité. Ceci a deux conséquences : il devient possible de réaliser des découpes d'épaisseur plus importante (cm), et il est possible d'éliminer des déchets secondaires tels que des sédiments se présentant par exemple sous la forme de billes métalliques, et de réduire le volume d'aérosols et de gaz de découpe produits.

De manière plus précise, l'invention a pour objet un dispositif pour la découpe laser comportant :

- des moyens pour émettre un faisceau laser impulsionnel, avec des impulsions d'énergie E≥10 Joules,
- au moins une fibre optique pour transmettre les impulsions laser, depuis les moyens d'émission du faisceau laser et en direction d'une pièce à découper,
- des moyens de focalisation du faisceau laser, de distance focale f≥50 cm.

La transmission du faisceau par une fibre optique permet d'opérer à distance. En outre, ce procédé ne met pas en oeuvre de projection de gaz d'appoint, au niveau de la zone d'impact du faisceau laser. L'utilisation d'une optique de focalisation à grande distance focale (f≥50 cm ou 1 m) permet d'opérer à distance entre l'optique et la pièce à découper.

Les moyens de focalisation comportent un ensemble de lentilles ou une lentille asphérique à gradient d'indice ou un télescope. Ils peuvent également comporter un mélange hybride d'éléments diffractifs et réfractifs.

La densité de puissance nécessaire au sein de la tache de focalisation du faisceau laser utilisé sans gaz d'appoint, conformément à l'invention, peut être inférieure à celle nécessaire pour une découpe laser classique.

Pour des distances de focalisation supérieures à un mètre, n'utilisant pas l'optique diffractive, on utilise un télescope à miroir centré qui présente l'inconvénient de fortes diffractions sur les bords des optiques, mais avec un astigmatisme satisfaisant, ou bien à miroir décentré, qui élimine la diffraction mais focalise le faisceau elliptiquement selon deux axes.

Le fait d'utiliser un laser fonctionnant en mode impulsionnel permet de créer un plasma pulsé très énergétique au voisinage de la zone d'impact sur la pièce à découper. En fait, l'impulsion laser a pour conséquence d'ajouter à l'échauffement du matériau un effet de chasse qui permet de supprimer le gaz d'assistance utilisé dans les applications industrielles classiques, ou le second laser Q-switch décrit dans le brevet US-4 870 244. Cet effet de chasse s'explique par la qualité du plasma, très énergétique, créé par les impulsions laser.

Ce plasma a un autre effet positif sur la découpe : il permet une autofocalisation du faisceau dans l'épaisseur du matériau découpé. Ceci explique que, malgré l'absence de gaz d'assistance, on obtienne des découpes de très bonne qualité (les saignées sont très fines, d'une taille sensiblement identique au diamètre de la tache focale, et à bords parallèles) et profondes (il devient possible de découper des matériaux épais). Le fait d'obtenir des saignées fines permet en outre de réduire les déchets secondaires produits, tels que les gaz ou des sédiments du type bille métallique, et donc d'éviter de salir de manière trop rapide les moyens de focalisation présents en sortie de fibre optique.

L'invention met de préférence en oeuvre un seul mode laser (mode relaxé), ce qui permet d'obtenir une stabilité modale, gage de l'uniformité du couplage pour la découpe, même sur un chantier.

Le pilotage d'un laser en mode impulsionnel est aisé : la hauteur, la largeur et l'espacement des impulsions sont réglables. Il est donc possible d'optimiser les opérations de découpe en fonction du contexte, étant donné l'effet de ces paramètres d'impulsion sur la physique spatio-temporelle du plasma créé au voisinage de la zone d'impact. Par exemple, si le découpage est effectué sur des petites épaisseurs, il n'est pas nécessaire d'envoyer des impulsions très énergétiques.

Les moyens de focalisation du faisceau laser sont situés à l'extrémité de la, ou des, fibre(s) optique(s).

L'extrémité de la fibre optique destinée à amener l'énergie laser vers la pièce à découper peut faire partie d'une tête de découpe qui peut être orientable.

Des moyens peuvent en outre être prévus pour évaluer la distance entre la tête de découpe et la pièce à découper. Ces moyens peuvent comporter par exemple une caméra, et/ou un télémètre et/ou un profilomètre.

Il est également possible de prévoir des moyens de contrôle de la position de la tête de découpe et/ou des moyens de contrôle de la focalisation du faisceau.

Par ailleurs, des moyens peuvent être prévus pour déplacer la tête de découpe. Ainsi, dans le cas d'une pièce à découper qu'il n'est pas possible de déplacer, c'est l'extrémité de la tête de découpe elle-même, que l'on déplace. Ces moyens de déplacement peuvent par exemple comporter un ou plusieurs bras robotisé(s), ou des dispositifs de déplacement comportant un ou deux axes asservis en vitesse et en position.

Les moyens émettant un faisceau laser et pouvant être utilisés dans le cadre d'une application du type démantèlement sont de préférence des lasers de type YAG-Nd ou iode-oxygène.

L'invention a également pour objet un procédé de découpe laser d'une pièce à découper comportant :

- l'émission d'impulsions laser, d'énergie E≥10 Joules,
- la transmission de ces impulsions laser par au moins une fibre optique, en direction d'une pièce à découper,
- la focalisation du faisceau laser sur ladite pièce à découper, par un dispositif de focalisation de distance focale f≥50 cm.

Ce procédé permet de résoudre les problèmes qui ont été déjà discutés ci-dessus, avec les mêmes avantages que ceux déjà mentionnés ci-dessus en liaison avec la description du dispositif.

Selon un mode particulier de réalisation de ce procédé, la distance entre la pièce à découper et l'extrémité de la tête de découpe destinée à être tournée vers la pièce à découper peut être évaluée. Il est également possible de contrôler la position de l'extrémité de la tête de découpe et/ou la focalisation du faisceau.

L'invention a également pour objet un procédé tel que décrit ci-dessus mettant en oeuvre un dispositif tel que décrit ci-dessus.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un schéma de principe d'un dispositif selon l'invention,
- la figure 2 représente un exemple de mise en oeuvre de l'invention,
- la figure 3 est un dispositif de focalisation pour un dispositif selon l'invention,
- la figure 4 représente schématiquement une pièce à découper ainsi qu'un faisceau laser incident, obtenu avec un dispositif selon l'invention.

Description détaillée de modes de réalisation de l'invention

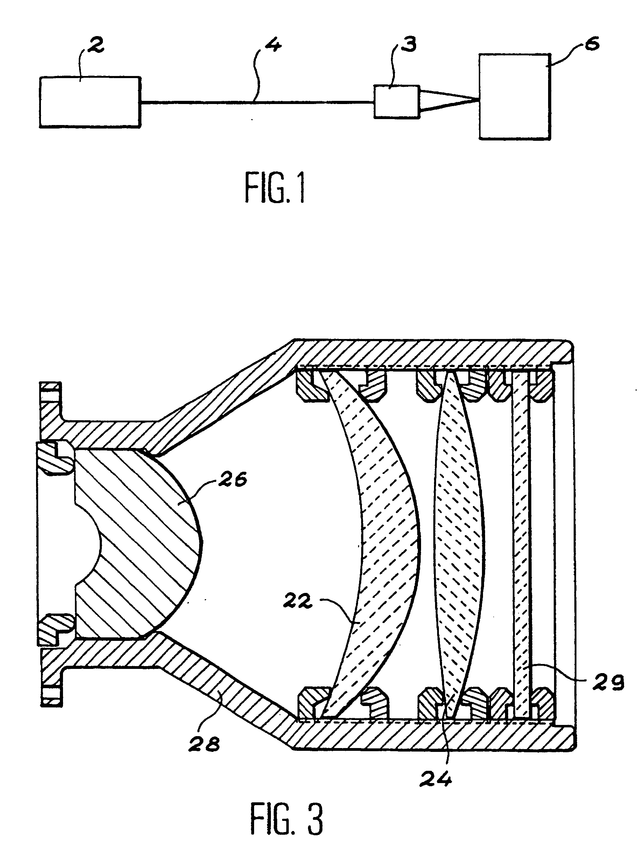

Un schéma de principe de l'invention est représenté sur la figure 1. La référence 2 désigne une source laser, fonctionnant en mode impulsionnel et relaxé. Une fibre optique 4 permet de transmettre les impulsions laser en direction d'une pièce à découper 6. Des moyens de focalisation 3 permettent de focaliser le faisceau laser en surface de la pièce à découper.

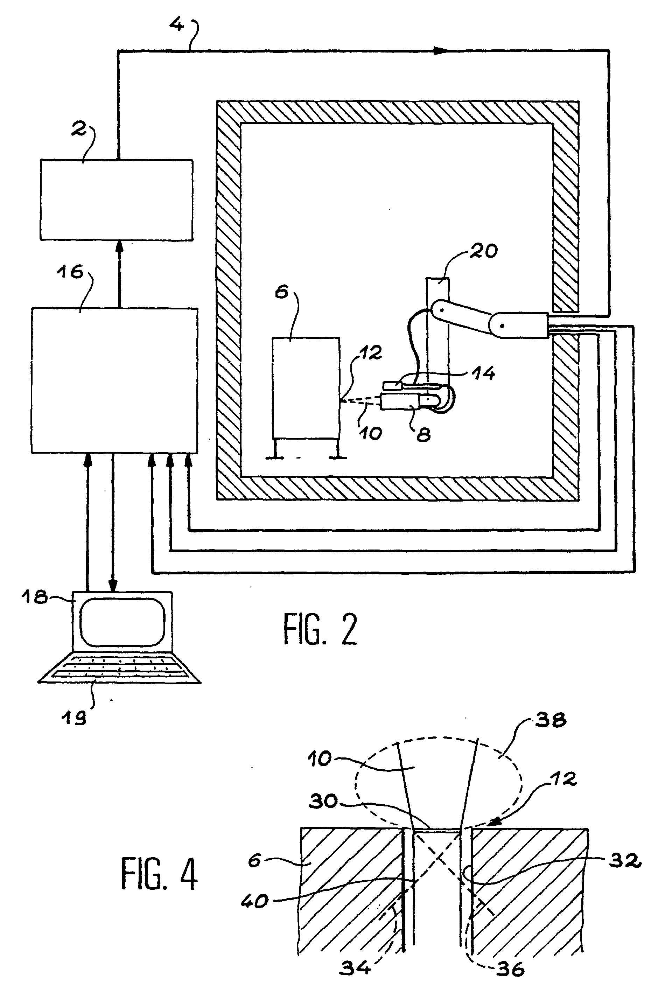

Une mise en oeuvre de l'invention va être décrite en liaison avec la figure 2, sur laquelle la référence 2 désigne la source laser, par exemple une source Nd: YAG de puissance utilisable en mode impulsionnel et dont les impulsions peuvent être paramétrées en fréquence, en énergie et en durée. Les sources Nd:YAG actuelles délivrent des puissances pouvant aller actuellement jusqu'à environ 5 kW : les progrès réalisés sur ces sources permettront ultérieurement d'utiliser de plus fortes puissances en liaison avec l'invention. Une, ou plusieurs, fibre(s) optique(s) 4 permet(tent) un transport du rayonnement issu de la source impulsionnelle laser en direction de la pièce à découper 6, située à distance. Dans le cas d'opérations de démantèlement, une telle distance peut atteindre une centaine de mètres. Le faisceau 10 est ensuite projeté en direction de la pièce 6, l'extrémité de la fibre optique pouvant être maintenue par exemple dans une tête de découpe 8. Des moyens, non représentés sur la figure, permettent la focalisation du faisceau laser 10 au niveau d'une zone d'impact 12, à proximité de la surface de la pièce à découper. Ces moyens de focalisation, à distance focale fixe ou variable, peuvent être incorporés dans la tête de découpe 8.

Les moyens de focalisation prévus permettent de travailler à distance, par exemple à une distance de l'ordre de 1 mètre.

Afin d'obtenir le maximum de puissance de découpe, on choisit de préférence une optique adaptée à la grande ouverture de faisceau en sortie de fibre optique.

Un système de focalisation convenant à l'application envisagée est celui schématisé sur la figure 3. Il comporte trois lentilles 22, 24, 26. Ces éléments sont alignés et centrés les uns par rapport aux autres, et sont protégés des agressions extérieures par un montage en barillet 28 et un hublot de protection 29. Le montage en barillet permet un positionnement précis. L'association de trois lentilles permet une diminution de la tache de focalisation, donc l'obtention d'une puissance de coupe suffisante, ainsi qu'une réduction des dimensions du système (d'où un encombrement limité).

Dans le montage de la figure 3, la fibre optique, amène le faisceau laser sur un ménisque divergent qui augmente d'ouverture du faisceau. Une autre lentille, à deux dioptres, est associée au ménisque. On obtient donc un système à 3 éléments auquel peut être ajouté un hublot de protection.

Il est possible d'utiliser un matériau standard pour réaliser les lentilles (par exemple, matériau "BK7") .

En utilisant la méthode de MTF (fonction de transfert de modulation), on montre que la qualité de la focalisation diminue si la fibre optique s'éloigne, dans son montage, de l'axe optique du système; Il est donc préférable que la fibre optique soit centrée sur l'axe avec une précision de 5/10è de mm ou encore de 2/10è ou de 3/10è ou mieux encore de 1/10è de mm.

Pour conserver un diamètre de tache de focalisation sensiblement égal au diamètre de la fibre optique, on choisit un système de focalisation tel que le faisceau, à sa sortie, ait à peu près la même divergence qu'en sortie de fibre optique. Ainsi, pour conserver une tache de focalisation de 1 mm, on prend un faisceau ayant, à la sortie du système de focalisation, par exemple environ 7° d'angle : ceci entraîne, pour une focalisation à un mètre, un diamètre de système de focalisation de l'ordre de 250 mm, au minimum.

Des moyens 14, comportant par exemple une caméra et/ou un télémètre et/ou un profilomètre, peuvent être prévus à proximité de la tête 8, ou de l'extrémité de la, ou des, fibre (s) optique (s) 4, afin de permettre une évaluation de la distance à la surface de la pièce. Les données transmises à partir des moyens 14 peuvent être analysées dans un dispositif de commande 16 prévu à cet effet. Un dispositif de commande des impulsions (fréquence, durée, énergie, ...) de la source laser 2 pouvant être prévu, il peut par exemple être intégré dans le dispositif de commande 16. Ce dispositif peut comporter par exemple un micro-ordinateur ou microprocesseur conventionnel convenablement programmé pour l'analyse des données. Les instructions de programme appropriées peuvent être enregistrées sur disque magnétique ou sur des unités conventionnelles de type RAM ou ROM. Par ailleurs, peuvent être également prévus des moyens 18 d'affichage des données analysées ou de l'image visualisée à l'aide de la caméra, un opérateur pouvant éventuellement introduire des données de pilotage ou de commande à l'aide d'un clavier 19 ou poste de commande. L'opérateur peut ainsi prendre une décision quant à la nécessité de déplacer la tête de découpe, et/ou les moyens de focalisation, par rapport à la surface de la pièce 6. Des moyens de contrôle de la position de l'extrémité de la fibre et/ou des moyens de contrôle de la focalisation du faisceau peuvent également être prévus ; en particulier, il peut être prévu un déplacement automatique de la tête de découpe et/ou des moyens de focalisation lorsqu'une certaine distance, par exemple entre l'extrémité de la tête de découpe et la surface de la pièce 6 à découper, a été mesurée et lorsqu'il est établi par des moyens de comparaison, ou lorsque l'opérateur constate que cette distance mesurée ou évaluée s'écarte, d'une trop grande marge, d'une certaine distance prédéterminée, enregistrée au préalable, par exemple dans les moyens de mémorisation mentionnés ci-dessus.

Par ailleurs, il est souvent préférable de déplacer la tête de découpe par rapport à la pièce, plutôt que l'inverse, afin de réaliser un sillon de découpe. En effet, la pièce est souvent volumineuse, il peut s'agir par exemple d'une partie d'une installation nucléaire. Dans ce cas, des moyens de déplacement de la tête de découpe le long d'une trajectoire pouvant être contrôlée par l'opérateur peuvent être prévus. Ainsi, dans l'exemple représenté sur la figure 2, une tête de découpe 8 incorpore l'extrémité de la fibre, et cette tête de découpe est déplacée par rapport à la pièce à l'aide d'un bras robotisé 20 permettant divers déplacements dans l'espace (translation, pivotement par rapport à certains axes).

Selon un autre exemple, l'extrémité de la fibre peut être déplacée à l'aide d'une table permettant des déplacements suivant une ou deux directions dans l'espace.

Le contrôle d'un bras robotisé 20, ou d'une table, peut être réalisé à distance à l'aide d'une console de commande 16 et de moyens de commande interactifs 18, 19. Dans ce type de commande, il peut en outre être intéressant de pouvoir faire varier la vitesse de déplacement de la tête par rapport à la pièce à découper.

La figure 4 représente, de manière agrandie, l'impact d'un faisceau laser 10 de découpe au niveau de la pièce à découper 6. La référence 30 désigne la tache focale, qu'il est possible de faire varier en faisant varier les paramètres des moyens de focalisation. La référence 32 désigne la saignée obtenue. Les lignes en pointillé 34 et 36 délimitent la divergence théorique du faisceau. En fait, le découpage d'une zone superficielle de la pièce 6 initie la création d'un plasma 38 au niveau, ou au-dessus, de la zone de découpe. Le plasma obtenu par la technique de découpe selon l'invention est très énergétique, et permet de créer un effet de chasse de la matière fondue, qui permet de remplacer le gaz d'assistance utilisé dans les applications industrielles classiques. Ce plasma 38 a un autre effet positif sur la découpe : il permet une autofocalisation du faisceau 10 dans l'épaisseur du matériau découpé. En fait, le faisceau n'a pas la divergence théorique délimitée par les lignes 34-36, mais il est plutôt parallèle et se propage selon la direction 40. Ainsi, une très bonne qualité de découpe est obtenue, et c'est cet effet d'autofocalisation qui permet d'expliquer d'une part la finesse de saignées à bords bien parallèles, d'une taille sensiblement identique au diamètre de la tache focale 30, et ceci malgré l'absence de gaz d'assistance, et, d'autre part, l'importante profondeur de découpe qu'on peut obtenir (environ 20 mm) .

Le fonctionnement en mode impulsionnel permet, toujours du fait de la création d'un plasma 38, une plus grande tolérance sur les autres paramètres de découpe : par exemple, la précision de la focalisation est assez peu critique, en tout cas moins que dans les techniques mettant en oeuvre un gaz d'appoint. Le plasma permet de disposer d'une densité d'énergie plus importante, et il y a moins besoin d'asservir la focalisation, du fait de l'autofocalisation du faisceau.

Le plasma d'interaction laser-matière, dans le cadre d'un procédé de découpe selon l'invention, a des effets contradictoires, que l'on s'emploie à séparer lors d'une opération de découpe. D'une part, il favorise le couplage de l'énergie du faisceau laser à la pièce irradiée tant qu'il reste en contact avec celle-ci, ou très près de sa surface. Il est alors transparent au faisceau laser. D'autre part, il devient opaque au faisceau laser dès qu'il se détache, ce qui se produit à un instant et à une puissance donnés : il devient alors optiquement épais.

Le plasma optiquement mince effectue des échanges d'énergie avec le milieu ambiant par conduction thermique, transfert radiatif et onde de choc. Cette dernière est très semblable à une onde d'absorption, car elle se propage dans la direction opposée à celle du laser selon les régimes suivants :

a) d'abord, en régime d'onde de combustion,
b) puis en régime d'onde de détonation,
c) enfin, en régime d'onde de radiation.

L'onde de combustion est le mode de propagation qui intervient d'abord lorsque la puissance incidente I est comprise entre $10^4$ et $10^6$ W/cm$^2$ dans l'air ambiant. Le transfert d'énergie se fait alors essentiellement par conduction et par rayonnement. Dans ce cas, une onde de choc précède le front d'absorption, mais la température du gaz ambiant reste suffisamment faible pour qu'il soit transparent au rayonnement laser. La vitesse de propagation de l'onde de combustion devient donc essentiellement fonction du pouvoir absorbant du plasma.

Par la suite, l'onde de combustion qui prend naissance dans la vapeur de la zone d'impact transfère son énergie à l'air environnant. Cet air absorbe alors une fraction importante de l'énergie laser ainsi transférée. Ceci provoque encore un échauffement important de la cible, et donc une augmentation supplémentaire considérable de sa température.

L'onde de détonation apparaît pour $I>10^7$ W/cm$^2$ dans l'air ambiant, lorsque le front de choc n'est plus séparé du front d'absorption. La zone d'absorption se positionne directement derrière l'onde de choc, le chauffage initial du milieu étant suffisant pour amorcer le processus d'absorption. La vitesse de propagation du plasma est alors déterminée essentiellement par la nature, la densité du gaz de la zone d'impact et l'intensité qu'il a absorbée.

Quand l'intensité du faisceau devient très élevée ($I>1GW/cm^2$) le processus de transfert d'énergie provient essentiellement de la conduction thermique et du rayonnement, qui deviennent plus efficaces que le chauffage par onde de choc. Le plasma d'interaction atteint alors une température très élevée, et réémet un rayonnement UV intense qui chauffe le gaz froid environnant l'opération. Le résultat est que le gaz devient absorbant à son tour, s'ionise rapidement et atteint l'état de plasma. Dans ce cas, la vitesse de l'onde dépend de l'énergie interne du gaz due à son absorption de l'intensité laser.

Dans le procédé de découpe de démantèlement par laser de puissance, sans gaz d'assistance, conformément à l'invention, la création du plasma d'impact se déplaçant au voisinage de la surface d'une cible métallique provoque une altération du couplage énergétique, ce qui donne une onde de combustion dans le cas où la vitesse de déplacement du plasma (mais pas du faisceau laser) au niveau de l'impact est subsonique, et une onde de détonation lorsque la vitesse de déplacement du plasma d'interaction est supersonique.

Dans l'opération de découpe, il existe trois types d'oscillation entre lesquels on peut établir un compromis pour permettre au plasma d'impact d'évacuer le bain liquide produit après l'impact du faisceau focalisé sur la surface à découper (autrement, le métal solide se reforme). Ces oscillations sont les suivantes :

a) l'oscillation du faisceau laser,
b) l'oscillation du plasma d'impact,
c) l'oscillation de la phase fondue.

On peut établir des conditions opératoires optimales pour lesquelles les différentes oscillations interfèrent, pour donner lieu à des phénomènes d'interférence constructive entre les différentes ondes produites dans le plasma d'impact et l'onde électromagnétique du faisceau laser. Ceci permet, sous certaines conditions et à un certain moment du cycle opératoire, d'améliorer le couplage énergétique avec le faisceau laser. On peut alors utiliser des lasers de bien plus faible puissance. On peut aussi alors utiliser des densités de puissance focalisées plus faibles. Les phénomènes d'interférence constructives provoquent une onde de détonation synchronisée avec l'onde du laser, ce qui permet de chasser le matériau fondu, donc de découper.

Pour établir des conditions de fonctionnement optimales, on peut prendre en compte une grandeur caractéristique du plasma d'interaction, sa fréquence d'oscillation fondamentale. Celle-ci permet de donner une première évaluation des différents paramètres du faisceau laser à prendre en considération pour la découpe sans gaz d'appoint, tels que la fréquence, la hauteur et l'espacement des impulsions lasers, pour lesquels les phénomènes d'interférence et de résonance se produisent, et pour lesquels, par conséquent, la détonation synchronisée onde du plasma-onde du laser permet l'évacuation du matériau fondu.

A la fréquence d'oscillation fondamentale correspond une pulsation $\omega_{pe}$ des oscillations de plasma, définies par :

$$\omega_p = (n_e q_e{}^2/m_e \varepsilon_0)^{1/2} \approx 56,4 x n_e{}^{1/2}$$

où $q_e$ est la charge de l'électron et $n_e$ la densité électronique du plasma non perturbé. En toute rigueur, la fréquence du plasma est, en unités MKS, la quantité :

$$f_p = \omega_p/2\pi = 8,976.10^3 \sqrt{n_e} \approx 8,976 x n_e{}^{1/2}.$$

Dans les plasmas d'interaction produits par laser de puissance sur cible solide, la densité des électrons $n_e$ est de l'ordre de $10^{24}$ à $10^{27} m^{-3}$, et la température électronique $T_e$ est comprise entre $10^2$ et $10^3$ eV, ce qui donne une longueur de Debye de l'ordre de $10^{-7}$ m. Dans ce cas, la pulsation $\omega_p$ des oscillations de plasma d'interaction laser-matière est de l'ordre de $5,64.10^{13}$ rad/s lorsque $n_e=10^{24}m^{-3}$, et de $1,783.10^{14}$ rad/s pour $n_e=10^{25}$ $m^{-3}$. Donc, les ondes du plasma émises, suite à la propagation des oscillations collectives du plasma, ont une pulsation comprise entre $5,64.10^{13}$ rad/s et $1,783.10^{15}$ rad/s.

Dans le cas de découpe de démantèlement par laser YAG:Nd ($\lambda$=1, 06 $\mu$m) , la pulsation de l'onde électromagnétique du rayonnement laser est ($\omega$=1,778.10^{15}$ rad/s.

On constate que le phénomène de résonance entre l'onde électromagnétique du faisceau laser et les ondes de détonation et de combustion du plasma d'interaction laser-cible se produit dans les plages de fréquences situées entre $5,64.10^{13}$ rad/s et $5, 64.10^{14}$ rad/s lorsque la densité électronique varie entre $10^{24}cm^{-3}$ et $10^{27}cm^{-3}$. Il provoque alors des effets d'interférence constructives : l'amplitude de l'onde sortante est amplifiée. Ceci donne un supplément d'énergie et améliore le couplage énergétique entre le faisceau laser et les ondes émises par le plasma d'interaction.

D'une manière générale, on cherche à obtenir une pulsation de l'onde du rayonnement laser voisine de la pulsation des oscillations de plasma $\omega_p$. Pour $\omega \approx \omega_p$, la fonction diélectrique (la permittivité du milieu) tend vers 0. Dans ce cas, il y a résonance entre l'onde du faisceau laser et l'onde du plasma, ce qui amplifie le couplage énergétique entre le faisceau laser et le matériau à découper.

Selon un exemple de réalisation, une source laser Nd:YAG fonctionnant en mode impulsionnel, avec 500 mm de distance focale, a été utilisée. Les paramètres des impulsions étaient les suivants : 120 Joules par impulsion, fréquence de répétition 10 Hertz, puissance de la source 1200 Watts. La tête 8 permettait une focalisation à distance comprise entre 0 et 10 mètres, la focale fixe ou variable (par exemple 0,5 à 5 mètres) était déplacée par un bras robotisé. Le fonctionnement en mode impulsionnel a permis de découper des tôles d'épaisseur 16 mm, en inox 316L, avec 200 mm de distance focale, sans gaz d'appoint, la vitesse de déplacement de la tête étant de l'ordre de 5 cm/min. Les saignées de découpe obtenues étaient très fines, avec une largeur de l'ordre de 1,5 mm pour un échantillon d'épaisseur 16 mm. Il a également été possible de découper des tôles d'épaisseur 5 mm, à 1 mètre de distance focale, les autres paramètres étant les mêmes que ci-dessus. En fait, la qualité de saignée obtenue est comparable à celle obtenue dans le cas d'un dispositif de découpe classique, mettant en oeuvre un gaz d'assistance (découpe de production).

Des exemples d'essais comparatifs de découpe ont été effectués avec différentes configurations, d'une part des configurations classiques, et d'autre part des configurations selon l'invention.

Un premier essai correspond au cas d'une découpe traditionnelle, avec jet d'oxygène projeté au niveau du point d'impact laser sur la surface à découper. Une découpe de bonne qualité est obtenue : la saignée est peu large (e=1-1,5 mm) et il n'y a pas de métal fondu sur la saignée.

Puis, le gaz d'assistance a été supprimé. La puissance laser est maintenue de manière quasi-continue, et il est seulement possible de découper des épaisseurs faibles (de l'ordre de quelques mm). Les découpes obtenues sont de très mauvaise qualité : la saignée atteint 4 mm de large, elle est de géométrie irrégulière et une certaine quantité de métal fondu reste collée à la pièce.

Enfin, on a mis en oeuvre un dispositif et un procédé selon l'invention, dont les spécifications ont été données ci-dessus, dans une tôle de 16 mm d'épaisseur (focale de 500 mm). On a travaillé en mode impulsionnel, à distance, et le plasma créé par l'énergie des impulsions a permis de compenser l'absence de gaz d'assistance, et d'obtenir une saignée profonde de très bonne qualité (la saignée a une largeur e de l'ordre de 1 à 1,5 mm).

**Revendications**

1. Dispositif pour la découpe laser comportant :

   - des moyens (2) pour émettre avec un laser fonctionnant en mode impulsionnel, un faisceau laser avec des impulsions d'énergie E≥10 Joules,
   - au moins une fibre optique (4) pour transmettre les impulsions lasers, depuis les moyens d'émission (2) en direction d'une pièce (6) à découper,
   - des moyens de focalisation (3, 22, 24, 26) du faisceau laser, de distance focale f≥50 cm.

2. Dispositif selon la revendication 1, le faisceau laser ayant un rayonnement s'étendant dans une plage de fréquence comprise au moins en partie entre $5,64.10^{13}$ rad. $s^{-1}$ et $5, 64.10^{14}$ rad.$s^{-1}$.

3. Dispositif selon la revendication 1 ou 2, l'extrémité de la fibre optique destinée à être orientée vers la tête de découpe faisant partie d'une tête de découpe (8).

4. Dispositif selon l'une des revendications 1 à 3, des moyens (14) permettant d'évaluer la distance entre l'extrémité de la fibre optique et une pièce (6) à découper.

5. Dispositif selon la revendication 4, les moyens (14) pour évaluer la distance comportant une caméra, et/ou un télémètre et/ou un profilomètre.

6. Dispositif selon l'une des revendications 4 ou 5, comportant en outre des moyens de contrôle de la position de l'extrémité de la fibre et/ou des moyens de contrôle de la focalisation du faisceau.

7. Dispositif selon l'une des revendications 1 à 6 comportant en outre des moyens pour déplacer l'extrémité de la fibre optique.

8. Dispositif selon la revendication 7, les moyens de déplacement de la fibre optique comportant au moins un bras robotisé (20).

9. Dispositif selon l'une des revendications précédentes, dans lequel le laser (2) est du type Nd-YAG ou iode-oxygène.

10. Procédé de découpe laser d'une pièce (6) à découper comportant :

   - l'émission d'un faisceau laser (10) sous la forme d'impulsions laser, d'énergie E≥10 Joules,
   - la transmission de ces impulsions laser par au moins une fibre optique (4), en direction de la pièce (6) à découper,
   - la focalisation du faisceau laser (10) sur ladite pièce (6) à découper, par un dispositif de focalisation de distance focale f≥50 cm.

11. Procédé selon la revendication 10, le faisceau laser ayant un rayonnement s'étendant dans une plage de fréquence comprise au moins en partie entre 5, 64 .10$^{13}$ rad. s$^{-1}$ et 5,64.10$^{14}$rad.s$^{-1}$.

12. Procédé selon la revendication 10, dans lequel on évalue la distance entre l'extrémité de la fibre et la pièce (6) à découper.

13. Procédé selon l'une des revendications 10 à 12, dans lequel on contrôle la position de l'extrémité de la fibre et/ou la focalisation du faisceau.

14. Procédé selon l'une des revendications 10 à 12, mettant en oeuvre un dispositif selon l'une des revendications 1 à 9.

15. Procédé de démantèlement d'une installation mettant en oeuvre un procédé de découpe selon l'une des revendications 10 à 14.

**Patentansprüche**

1. Vorrichtung zum Laserschneiden, umfassend:

   - Einrichtungen (2), die mittels eines impulslasers einen Laserstrahl mit Impulsen der Energie E≥10 Joules emittieren,
   - wenigstens eine optische Faser (4) zur Übertragung der Laserimpulse von den Emissionseinrichtungen (2) in Richtung eines zu schneidenden Teils (6),
   - Fokussiereinrichtungen (3, 22, 24, 26) des Laserstrahls mit der Brennweite f≥50 cm.

2. Vorrichtung nach Anspruch 1 mit einem Laserstrahl, dessen Strahlung sich über einen Frequenzbereich erstreckt, der wenigstens teilweise zwischen 5,64.10$^{13}$ rad.s$^{-1}$ und 5,64.10$^{14}$ rad.s$^{-1}$ enthalten ist.

3. Vorrichtung nach Anspruch 1 oder 2, bei der das schneidkopfseitige Ende der optischen Faser Teil eines Schneidkopfs (8) ist.

4. Vorrichtung nach einem der Ansprüche 1 bis 3 mit Einrichtungen (14) zum Bewerten der Entfernung zwischen dem Ende der optischen Faser and einem zu schneidenden Teil (6).

5. Vorrichtung nach Anspruch 4, wobei die Einrichtungen (14) zum Bewerten der Entfernung eine Kamera und/oder ein Entfernungmessgerät und/oder ein Oberflächenmessgerät umfassen.

6. Vorrichtung nach einem der Ansprüche 4 oder 5 mit außerdem Einrichtungen zum Steuern der Position des Endes der Faser und/oder Einrichtungen zum Steuern der Fokussierung des Strahls.

7. Vorrichtung nach einem der Ansprüche 1 bis 6 mit außerdem Einrichtungen zum Verschieben des Endes der optischen Faser.

8. Vorrichtung nach Anspruch 7, bei der die Einrichtungen zum Verschieben der optischen Faser wenigstens einen Roboterarm (20) umfassen.

9. Vorrichtung nach einem der vorangehenden Ansprüche, bei der der Laser (2) ein Nd-YAG- oder ein Jod-Sauerstoff-Laser ist.

10. Verfahren zum Laserschneiden eines Teils (6), umfassend:

   - Emission eines Laserstrahls (10) in Form von Laserimpulsen der Energie E≥10 Joules,
   - Übertragung dieser Laserimpulse durch wenigstens eine optische Faser (4) in Richtung des zu schneidenden Teils (6),
   - Fokussierung des Laserstrahls (10) auf das zu schneidende Teil (6) mittels einer Fokussiervorrichtung mit einer Brennweite f≥50 cm.

**11.** Verfahren nach Anspruch 10 mit einem Laserstrahl, dessen Strahlung sich über einen Frequenzbereich erstreckt, der wenigstens teilweise zwischen $5{,}64.10^{13}$ rad.s$^{-1}$ und $5{,}64.10^{14}$ rad.s$^{-1}$ enthalten ist.

**12.** Verfahren nach Anspruch 10, bei dem der Abstand zwischen dem Ende der Faser und dem zu schneidenden Teil (6) bewertet wird.

**13.** Verfahren nach einem der Ansprüche 10 bis 12, bei dem die Position des Endes der Faser und/oder die Fokussierung des Strahls gesteuert wird.

**14.** Verfahren nach einem der Ansprüche 10 bis 12, bei dem eine Vorrichtung nach einem der Ansprüche 1 bis 9 benutzt wird.

**15.** Verfahren zum Abtragen einer Anlage, bei dem ein Verfahren nach einem der Ansprüche 10 bis 14 benutzt wird.

**Claims**

**1.** A device for laser cutting, having:

- means (2) for emitting a pulsed laser beam, with energy pulses E≥10 joules,
- at least one optical fibre (4) for transmitting the laser pulses, from the means of emitting (2) the laser beam in the direction of a piece (6) to be cut,
- means of focusing (3, 22, 24, 26) the laser beam, with a focal distance f≥50 cm.

**2.** A device according to Claim 1, the laser beam having a radiation lying in a frequency range lying at least partly between $5.64 \times 10^{13}$ rad.secs$^{-1}$ and $5.64 \times 10^{14}$ rad. secs$^{-1}$.

**3.** A device according to Claim 1 or 2, the end of the optical fibre intended to be oriented towards the cutting head forming part of a cutting head (8).

**4.** A device according to one of Claims 1 to 3, means (14) making it possible to assess the distance between the end of the optical fibre and a piece (6) to be cut.

**5.** A device according to Claim 4, the means (14) for assessing the distance including a camera, and/or a range finder and/or a profile meter.

**6.** A device according to one of Claims 4 or 5, also having means of controlling of the position of the end of the fibre and/or means of controlling the focusing of the beam.

**7.** A device according to one of Claims 1 to 6, also having means for moving the end of the optical fibre.

**8.** A device according to Claim 7, the means of moving the optical fibre including at least one robotised arm (20).

**9.** A device according to one of the preceding claims, in which the laser (2) is of the Nd-YAG or iodine-oxygen type.

**10.** A method for the laser cutting of a piece (6) to be cut including:

- the emission of laser pulses (10), with an energy of E≥10 joules,
- the transmission of these laser pulses by at least one optical fibre (4), in the direction of a piece (6) to be cut,
- the focusing of the laser beam (10) onto the said piece (6) to be cut, by means of a focusing device with a focal distance f≥50 cm.

**11.** A method according to Claim 10, the laser beam having a radiation lying in a frequency range lying at least partly between $5.64 \times 10^{13}$ rad.secs$^{-1}$ and $5.64 \times 10^{14}$ rad. secs$^{-1}$.

**12.** A method according to Claim 10, in which the distance between the end of the fibre and the piece (6) to be cut is assessed.

**13.** A method according to one of Claims 10 to 12, in which the position of the end of the fibre and/or the focusing of the beam is controlled.

**14.** A method according to one of Claims 10 to 12, using a device according to one of Claims 1 to 9.

**15.** A method of dismantling an installation implementing a cutting method according to one of Claims 10 to 14.

FIG. 1

FIG. 3

FIG. 2

FIG. 4